Europäisches Patentamt

European Patent Office

Office européen des brevets

(11) Numéro de publication: **0 385 041**
**A1**

# (12) DEMANDE DE BREVET EUROPEEN

(21) Numéro de dépôt: **89460008.9**

(51) Int. Cl.⁵: **B62M 3/08**

(22) Date de dépôt: **03.03.89**

(43) Date de publication de la demande:
**05.09.90 Bulletin 90/36**

(84) Etats contractants désignés:
**BE CH DE ES GB IT LI NL**

(71) Demandeur: **Genet, Michel**
**Avenue du Stade Municipal**
**F-35600 Redon(FR)**

(72) Inventeur: **Genet, Michel**
**Avenue du Stade Municipal**
**F-35600 Redon(FR)**

(54) Dispositif de fixation d'une chaussure sur une pédale de bicyclette.

(57) Dispositif de fixation d'une chaussure sur une pédale de bicyclette.

Ce dispositif comprend deux parties principales :
- une platine destinée à être fixée sous la semelle, qui comporte une proéminence, ou tête, tournée vers le bas et pourvue d'une paire de rainures opposées ;
- une pédale qui comporte une paire de leviers articulés (75) disposés en vis-à-vis l'un de l'autre et adaptés pour venir se loger dans les rainures de ladite tête en enserrant cette dernière pour assurer sa retenue, lorsque la platine est mise en place sur la pédale ; des pistons (8) et (9) coopérant avec des rainures prévues sous la platine, assurent la retenue en torsion de la chaussure sur la pédale.

Matériel de cyclisme.

Fig. 7

La présente invention concerne un dispositif de fixation d'une chaussure sur une pédale de bicyclette.

Elle concerne plus particulièrement un dispositif du type permettant une solidarisation automatique de la chaussure avec la pédale et une désolidarisation rapide, soit automatique en cas d'apparition d'efforts anormaux (notamment en cas de chute), soit volontaire lorsque le cycliste désire s'arrêter.

Plus précisément encore, l'invention a pour objet un dispositif dans lequel la pédale est pourvue d'organes d'accrochage mobiles élastiquement qui sont adaptés pour coopérer avec des éléments de retenue complémentàaqu'elle y est rapportée, soit qu'elle est intégrée dans la semelle. La libération de la chaussure est obtenue par escamotage des organes d'accrochage, sous l'effet de l'effort de déchaussage, cet escamotage se faisant par déplacement à l'encontre des moyens élastiques qui sollicitent ces organes.

De tels dispositifs sont décrits par exemple dans les documents FR-A-2 310 914, FR-A-2 442 175, FR-A-2 485 226, FR-A-2 556 687 et WO-85/04 029.

Ces dispositifs donnent généralement satisfaction, car ils sont commodes à utiliser et améliorent sensiblement la sécurité par rapport aux cale-pied traditionnels. Dans la plupart des cas, c'est le même système élastique qui assure la solidarisation complète de la chaussure avec la pédale, à la fois pour retenir la chaussure dans le sens vertical et pour l'immobiliser en torsion, dans une position correcte qui correspond à la direction longitudinale de la pédale. Malheureusement, l'expérience a montré qu'en raison de cette unicité du système élastique, il se produisait dans certaines conditions des dégagements intempestifs de la chaussure par rapport à la pédale, en particulier lorsque le dispositif était soumis à des efforts élevés multidirectionnels. En outre, du fait que le système élastique doit nécessairement être puissant, pour résister à tous les efforts possibles de déclenchement, l'opération de chaussage du pied n'est pas toujours facile puisqu'il est nécessaire, au cours de cette opération, de vaincre provisoirement la force de ce système élastique.

Un autre inconvénient de ces systèmes connus est que la solidarisation de la chaussure avec la pédale est généralement totale, n'autorisant aucun mouvement latéral même limité (en torsion) du pied par rapport à la pédale, ce qui accroît la fatigue du cycliste au cours de l'utilisation du dispositif et est source de tendinites.

Enfin, ces dispositifs sont souvent lourds, complexes, disgracieux, et ont une durée de vie faible, leurs composants étant exposés et sensibles à l'usure, notamment la platine montée sous la chaussure.

On connaît également une autre catégorie de dispositif de fixation d'une chaussure sur une pédale, dans lequel il est prévu sous la chaussure une ou plusieurs parties mâles proéminentes, qu'il est possible d'emboîter dans une pièce femelle complémentaire prévue dans la pédale, cet emboîtement se faisant généralement par une rotation et/ou un glissement latéral du pied. Des dispositifs de ce genre sont décrits par exemple dans les documents FR-A-2 192 525, FR-A-2 279 607, FR-A-2 315 875, FR-A-2 401 823, FR-A-2 449 587 et US-A-3 964 343.

Ces dispositifs, dépourvus d'organes d'accrochage élastiquement mobiles, sont peu commodes à utiliser notamment au moment de la mise en place de la chaussure sur la pédale, du fait que cette opération se fait par un mouvement qui n'est pas naturel ; de plus, la liaison chaussure-pédale étant essentiellement tributaire des frottements, le fonctionnement du système est relativement aléatoire et peu sûr.

La présente invention vise à résoudre ces différents problèmes en proposant un dispositif du genre évoqué plus haut qui soit simple et commode à utiliser, d'un fonctionnement sûr et reproductible, à l'abri des déclenchements intempestifs.

Un autre objectif de l'invention est de réduire les risques de fatigue anormale et de tendinites chez le cycliste.

Enfin, un autre objectif de l'invention est de protéger efficacement de l'usure les principaux éléments fonctionnels du dispositif, afin de réduire autant que possible les effets de cette usure sur son fonctionnement.

Ces résultats sont atteints, conformément à l'invention, grâce au fait que les organes d'accrochage comprennent une paire de leviers parallèles, disposés en vis-a-vis l'un de l'autre, sensiblement dans un même plan qui est parallèle au plan de la surface supérieure de la plate-forme qui est destinée à servir d'appui à la platine, ces leviers étant articulés autour d'axes perpendiculaires à ce plan et étant sollicités par un moyen élastique qui tend à les rapprocher l'un de l'autre, tandis que les éléments de retenue complémentaires portés par la platine comprennent une proéminence - ou tête - tournée vers le bas et pourvue d'une paire de rainures opposées, cette tête étant adaptée pour s'engager entre les deux leviers lorsque la chaussure est mise en place sur la pédale, de telle manière que les leviers viennent se loger dans les rainures en enserrant la tête pour assurer la retenue de celle-ci.

En outre, selon un certain nombre de caractéristiques avantageuses (mais non limitatives) de la présente invention :
- les bords correspondants inférieurs de la tête et supérieurs des leviers sont chanfreinés, de manière à former des rampes qui permettent la mise en place automatique de haut en bas, par encliquetage élastique de la tête entre les leviers ;

- la tête a une forme générale cylindrique, et la plate-forme présente une ouverture circulaire de diamètre correspondant, qui autorise le passage de la tête ;

- les deux leviers sont approximativement parallèles à l'axe longitudinal de la pédale, et les rainures latérales prévues dans la tête sont rectilignes ;

- les axes d'articulation des leviers sont situés en avant de la tête et sont sollicités par un ressort de traction transversal accroché à leurs extrémités libres, en arrière de la tête ;

- les leviers sont coudés en forme de "L", les faces avant de leur partie coudée étant adaptées pour servir d'appui à un méplat formé à l'arrière de la tête ;

- il est pourvu des moyens élastiques additionnels qui assurent l'immobilisation en torsion de la chaussure sur la pédale, ces moyens comprenant au moins un piston sollicité par un ressort qui fait saillie au-dessus de la surface supérieure de la plate-forme, l'extrémité supérieure de ce piston étant adaptée pour s'engager dans une rainure complémentaire ménagée dans la face inférieure de la platine ;

- l'extrémité de ce piston et la rainure associée ont des faces d'appui inclinées formant rampes, leur section ayant la forme générale d'un trapèze ;

- la tension du ressort sollicitant le piston peut être ajustée au moyen d'un bouchon de réglage accessible par le dessous de la pédale ;

- il est prévu deux pistons de verrouillage disposés l'un en avant et l'autre en arrière de la tête, sur l'axe longitudinal de la pédale, ces pistons coopérant avec des rainures longitudinales ménagées sous la platine ;

- le piston (ou les pistons) est (sont) engagé(s) dans la rainure associée avec un certain jeu qui autorise un libre débattement en torsion, d'amplitude limitée, de la chaussure par rapport à la pédale ;

- la partie avant de la platine présente un bord convexe apte à venir en appui contre un rebord concave prévu à l'avant de la pédale ;

- la platine est munie, à sa partie arrière, d'organes d'appui au sol tels que des têtons qui évitent que la tête ne porte sur le sol au cours de la marche.

D'autres caractéristiques et avantages de l'invention apparaîtront de la description et des dessins annexés qui en présentent un mode de réalisation préférentiel.

Sur ces dessins :

- la figure 1 est une vue de dessous de la platine ;

- la figure 2 est une vue de côté de la platine de la figure 1 ;

- la figure 3 est une vue de côté de cette même platine, coupée par le plan III-III de la figure 1 ;

- les figures 4, 5 et 6 sont des sections transversales de la figure 1, respectivement par les plans IV, V et VI ;

- la figure 7 est une vue de dessus de la pédale ;

- la figure 8 est une vue de côté de cette pédale, coupée par le plan VIII-VIII ;

- la figure 8A est une vue de détail, en perspective de l'un des deux pistons équipant le dispositif ;

- la figure 9 est une vue de dessus schématique du dispositif, qui représente uniquement les organes fonctionnels assurant la retenue de la platine sur la pédale ;

- la figure 10 est une vue analogue à la figure 9 montrant le dispositif au cours d'un mouvement de rotation du pied (torsion) ;

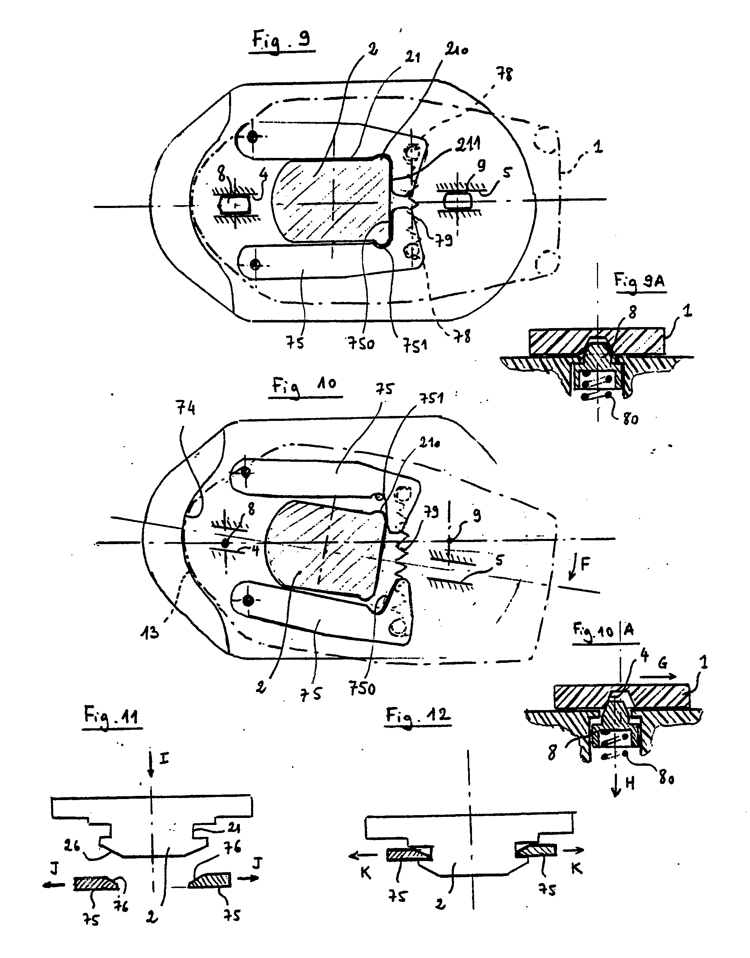

- les figures 9A et 10A sont des vues partielles transversales en coupe représentant un dispositif d'immobilisation en torsion, respectivement lorsque la chaussure est en position normale (position de la figure 9) et lorsqu'elle est soumise à une rotation (position de la figure 10) ;

- les figures 11 et 12 sont des vues schématiques illustrant la manière dont la tête de platine est mise en place entre les leviers d'accrochage et la manière dont elle y est retenue.

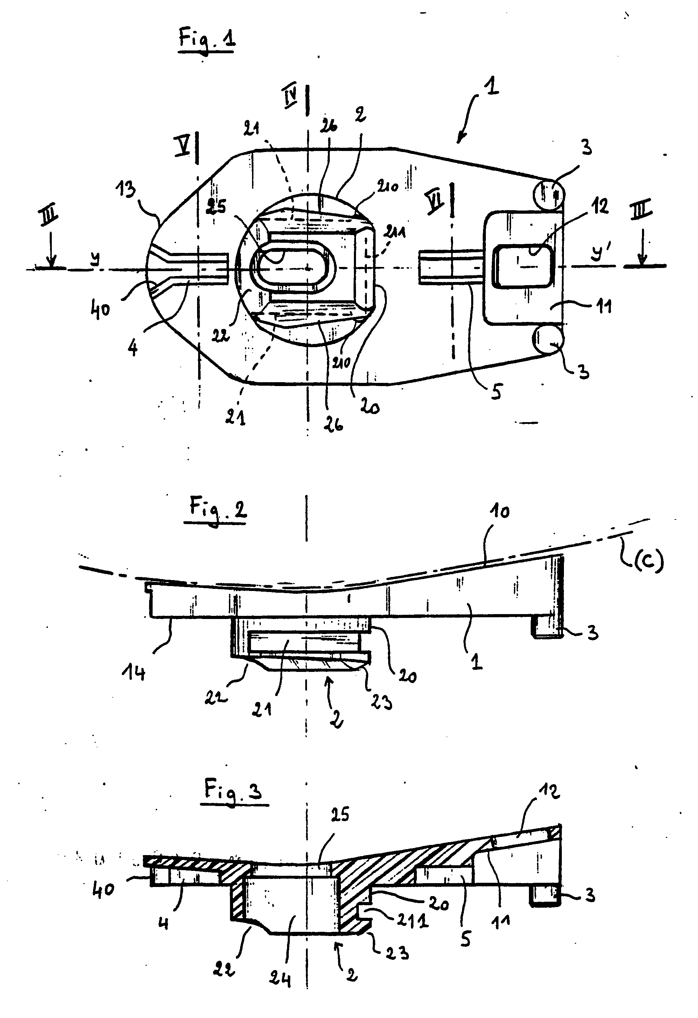

La platine représentée sur les figures 1 à 3 est une pièce en matière plastique mécaniquement résistante, dont la face supérieure 10 a une forme convexe, qui correspond approximativement au galbe de la partie avant d'une semelle de chaussure cycliste (C) ; cette platine est adaptée pour être fixée sous la semelle au moyen de vis, des trous allongés ou boutonnières 12, 25 étant prévus à cet effet dans la platine. L'emplacement de ces trous coïncide avec l'emplacement des deux écrous noyés normalement prévus dans la semelle en vue de la fixation d'un cale-pédale traditionnel.

Cette platine comporte une partie proéminente, ou tête 2, qui fait saillie vers le bas, au-delà de la face inférieure, généralement plane 14 de la platine. La tête 2 est située dans la région centrale de la platine ; elle a la forme générale d'un champignon cylindrique. La tête 2 est traversée par la boutonnière 25, et par un évidement 24 de plus grandes dimensions autorisant le passage de la tête de la vis de fixation.

Sur les figures, l'axe longitudinal de la platine et de la pédale ont été désignés par la référence (Y-Y'), et la pointe de la chaussure dont seul le contour de la semelle a été partiellement représenté à la figure 2, est censée se trouver sur la gauche des figures 1, 2, 3, 7, 8, 9 et 10, le talon se trouvant par conséquent à la droite de ces figures.

La partie arrière (c'est-à-dire tournée vers le talon) de la tête 2 présente un méplat 20, disposé transversalement, c'est-à-dire perpendiculairement à la face 14 de la platine et à l'axe Y-Y'. La tête 2 présente par ailleurs deux rainures rectilignes latérales 21, disposées symétriquement de part et d'autre de l'axe Y-Y', et une rainure transversale 211 qui traverse le méplat 20 en reliant les deux rainures opposées 21. Ces rainures ont une section carrée.

A sa partie inférieure, la tête 2 présente :
- sur son bord avant un chanfrein 22 ;
- sur son bord arrière, un chanfrein 23 ;
- sur ses bords latéraux, deux chanfreins 26.

A la partie arrière de chaque rainure 21 est prévu un bossage ou bourrelet hémisphérique 210.

A l'arrière de platine est ménagé un évidement 11 dans lequel débouche la boutonnière 12, cet évidement allégeant la platine et permettant le passage de la tête de vis prévue à l'arrière pour la fixation de la platine à la chaussure.

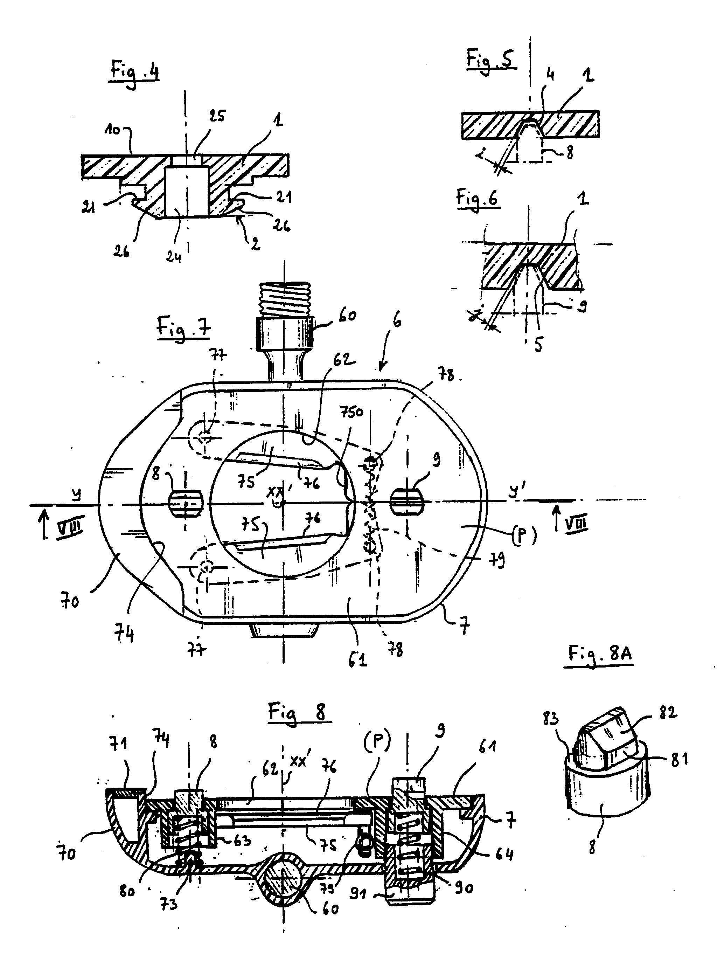

Sous la platine, sur l'axe Y-Y', sont creusées deux rainures 4, 5 qui présentent une section trapézoïdale, comme on le voit particulièrement sur les figures 5 et 6. L'angle au sommet de ces trapèzes est de préférence de l'ordre de 60°.

Ces rainures sont disposées l'une à l'avant et l'autre à l'arrière de la platine, c'est-à-dire de part et d'autre de la tête 2 ; la rainure avant 4 débouche sur le bord avant 13 de la platine, par l'intermédiaire d'un élargissement 40 en forme d'entonnoir ; la rainure arrière 5 débouche vers l'arrière dans l'évidement 11 ; le bord avant 13 est convexe, de forme arrondie approximativement en arc de cercle ; à l'arrière de la platine, de chaque côté de l'évidement 11, sont prévus deux têtons 3 qui font saillie vers le bas ; ces têtons sont destinés à servir à l'appui de la chaussure au sol durant la marche.

La platine qui vient d'être décrite a une forme parfaitement symétrique, de sorte qu'elle peut être utilisée indifféremment avec une chaussure et une pédale droites ou gauches.

La pédale qui fait partie du dispositif selon l'invention, visible plus particulièrement aux figures 7 et 8, a la forme générale d'un boîtier plat 6 constitué d'un corps 7 en forme de cuvette, sur lequel est fixé un couvercle 61 ; la fixation du couvercle sur le corps est réalisée par des moyens appropriés non représentés, par exemple au moyen de vis.

La pédale représentée est une pédale gauche. Il va de soi qu'une pédale droite serait tout à fait similaire, le montage de son axe 60 étant simplement inversé.

La face supérieure plane (plan P, figure 8) du couvercle 61 constitue une plate-forme adaptée pour servir d'appui à la face inférieure 14 de la platine, lorsque la chaussure est mise en place sur la pédale.

Les pièces 61 et 7 sont de préférence en matière plastique à haute résistance mécanique.

La paroi inférieure du corps creux 7 est adaptée pour recevoir et guider en rotation, par l'intermédiaire de butées à billes non représentées, l'axe 60 de la pédale.

Dans la partie centrale du couvercle 61, de préférence à l'aplomb de l'axe 60 de la pédale, est ménagée une ouverture circulaire 62. Le diamètre de cette ouverture est très légèrement supérieur au diamètre de la partie cylindrique de la tête 2. On a désigné par X-X' l'axe de cette ouverture, lequel est perpendiculaire au plan (P).

La plate-forme 61 est solidaire d'une collerette tubulaire 63, qui est dirigée vers le bas, c'est-à-dire à l'intérieur du boîtier 7. Cette collerette sert au guidage en translation, suivant un axe parallèle à X-X', d'un piston 8 dont l'extrémité supérieure présente deux méplats latéraux 81 et deux pans inclinés 82, en forme de dièdre ; l'angle au sommet de ce dièdre correspond à l'angle du trapèze de la rainure 4 ; il est en l'occurrence de l'ordre de 60°.

Cette extrémité 81, 82 traverse une ouverture de même contour formée dans le couvercle 61, de manière à faire saillie au-dessus du plan (P) ; la forme de l'ouverture, non circulaire, empêche donc la rotation du piston 8 sur son axe ; cette extrémité 81, 82 est raccordée au corps du piston 8 par une face 83 formant épaulement, par laquelle le piston vient en appui contre la face inférieure du couvercle 61 ; un ressort 80 qui prend appui contre le fond du boîtier 7 sollicite élastiquement le piston 8 dans sa position haute ; il s'agit par exemple d'un ressort de compression hélicoïdal, qui est guidé par un têton 73 prévu dans le fond du boîtier.

De manière tout à fait similaire, à l'arrière de l'ouverture 62, est monté un second piston 9 guidé dans une collerette 64 et sollicité dans sa position haute par un ressort 90 ; un bouchon 91 qui est vissé dans la collerette 64 permet d'ajuster la compression du ressort 90. Ce bouchon fait saillie en dessous du fond du boîtier 7, en traversant une ouverture appropriée qui y est ménagée à cet effet, de sorte qu'il est accessible de l'extérieur du boîtier ; il présente de préférence une surface striée ou cannelée, qui facilite le réglage à la main.

Comme on le voit à la figure 8, l'extrémité du piston 9 fait saillie au-dessus du plan (P) d'une valeur sensiblement supérieure à celle du piston avant 8 ; la saillie de la partie avant est par exemple de l'ordre de 4 mm et celle du piston arrière de l'ordre de 7 mm.

Le positionnement des pistons 8 et 9 est tel qu'ils se trouvent respectivement à l'aplomb des rainures 4 et 5, lorsque la platine est placée au-dessus de la pédale, la tête 2 centrée sur l'ouverture 62.

A l'intérieur du boîtier 7, sont montés une paire de leviers articulés 75 ; les axes d'articulation de ces leviers, référencés 77, sont situés à l'avant du boîtier, symétriquement de part et d'autre de l'axe longitudinal Y-Y' ; ils ont la forme générale d'un "L" dont les parties coudées 750 sont tournées l'une vers l'autre, ces parties se trouvant au niveau de l'arrière de l'ouverture 62. Les deux leviers 75 sont situés dans un même plan, , à faible distance au-dessous de ce dernier.

Chacun de ces leviers portent à son extrémité arrière, un têton 78 servant à l'accrochage d'un ressort de traction 79. Ce ressort, qui relie les deux leviers, les fait pivoter l'un vers l'autre, de sorte que les faces frontales des parties coudées se trouvent en appui l'une contre l'autre ; dans cette position, représentée à la figure 7, les bords intérieurs des deux leviers convergent légèrement vers l'arrière de la pédale ; ces bords intérieurs présentent de chanfreins 76 dont le rôle sera expliqué ultérieurement.

On notera par ailleurs que la partie avant 70 de la pédale est évidée, cet évidement étant recouvert par une plaque enjoliveuse 71 rapportée et fixée, par exemple par collage. La présence de cet évidement diminue le poids de la pédale, et en allège la partie avant, ce qui permet à la pédale de prendre naturellement une position à l'envers, avec le bord avant légèrement surélevé, ce qui facilite l'accrochage de la pédale par la platine au moment du chaussage de la pédale.

La face arrière du rebord avant 74 de la pédale a une forme concave en arc de cercle, conformée pour servir d'appui au bord 13 de la platine.

A titre indicatif, un ordre de grandeur de certaines dimensions du dispositif sont données ci-après :

- PLATINE :

- longueur et largeur 95 x 55 mm
- diamètre de la partie cylindrique de la tête 2 : 35 mm
- hauteur de cette tête : 11,5 mm
- hauteur des rainures 21 : 4,2 mm
- rayon de courbure du bord 13 : 20 mm

- PEDALE :

- longueur et largeur : 100 x 65 mm
- diamètre de l'ouverture 62 : 35,2 mm
- longueur des leviers 75 : 50 mm
- épaisseur de ces leviers : 4 mm
- rayon de courbure de la face arrière du rebord avant 74 : 30 mm

Nous allons maintenant expliquer de quelle manière le dispositif qui vient d'être décrit est utilisé.

Les platines 1 ayant été convenablement fixées sous les chaussures du cycliste, et les pédales 6 ayant été mises en place sur le pédalier de la bicyclette, comme des pédales traditionnelles, la fixation d'une chaussure sur une pédale se fait comme suit :

Comme on l'a déjà dit, l'équilibrage des pédales est tel que chacune des pédales se trouve naturellement à l'envers, mais disposée obliquement, la partie avant 70 étant surélevée.

Pour chausser la pédale, le cycliste approche sa chaussure par un mouvement sensiblement horizontal, dirigé d'arrière en avant, de façon à redresser la pédale (c'est-à-dire à la remettre à l'endroit) et à amener le bord avant 13 de la platine contre le rebord 74 ; en même temps, il cherche à aligner l'axe longitudinal Y-Y' de la platine avec celui de la pédale ; les extrémités en saillie des pistons 8 et 9 se positionnent donc respectivement dans les rainures 4 et 5 ; le positionnement du piston 8 se fait aisément, même si la mise en place initiale de la chaussure sur la pédale s'est faite de manière légèrement décalée, grâce à la forme évasée 40 de l'entrée de la rainure 4. Durant ce positionnement de la chaussure par rapport à la pédale, la platine a une position plongeante, le plan de la face plane 14 de la platine se trouvant incliné par rapport à la face (P) de la plate-forme 61, de haut en bas, si l'on regarde de l'arrière vers l'avant ; la tête 2 ne gêne pas ce positionnement préliminaire, grâce au chanfrein 22 prévu à l'avant de cette tête.

Ensuite, le cycliste procède au chaussage proprement dit de la pédale, en pressant avec son pied de haut en bas sur la pédale, de sorte que la tête 2 pénètre dans l'ouverture 62 ; la partie inférieure de tête 2 vient se positionner entre les deux leviers 75 ; les bords biseautés 26 de la tête viennent s'appliquer contre les bords biseautés correspondant 76 des leviers, provoquant l'écartement de ces derniers, comme cela est illustré à la figure 11, où le mouvement de descente de la tête 2 est figuré par la flèche (I), et le mouvement d'ouverture des leviers 75 par les flèches (J). Ce mouvement d'ouverture se fait, bien entendu, à l'encontre du ressort de traction 79. Lorsque, le mouvement de descente de la tête 2 continuant, les rainures latérales 21 arrivent en vis-à-vis de ces leviers, ceux-ci, sollicités par le ressort 79, se referment à la manière de ciseaux et viennent se loger dans les rainures.

La mise en place de la chaussure sur la pédale est alors terminée, la face inférieure 14 de la platine se trouvant en appui sur la plate-forme 61, et la tête 2 se trouvant emprisonnée entre les deux leviers 75 ; par ailleurs, les extrémités de pistons 8 et 9 se trouvent à l'intérieur des rainures 4, respectivement 5.

Selon une caractéristique importante, il est prévu entre les bords obliques des rainures 4, 5 et les pans obliques correspondants des pistons, un jeu de quelques dixièmes de millimètre ; ces jeux sont désignés par les références (i) et (j) aux figures 5 et 6. En outre, l'extrémité en saillie du piston arrière 9 est dimensionnée de telle manière que lorsque la platine 1 est en appui sur la pédale, il se trouve déjà légèrement enfoncé - par exemple de deux millimètres - à l'intérieur de la plate-forme 61, le ressort 90 ayant été comprimé au moment du chaussage ; par conséquent, la face supérieure (entre les parties biseautées du piston 9) est en appui contre le fond de la rainure 5, comme on le voit à la figure 6. Grâce à cet arrangement, même si la rainure 5 se soulève légèrement par rapport à la plate-forme 61, par accentuation du cambre de la chaussure, au cours du pédalage, comme cela peut se produire avec des cyclistes puissants, le piston 9 va pouvoir se soulever légèrement pour rester en appui en permanence contre le fond de la rainure, et éviter les jeux inopinés dans le sens vertical. Par contre, les jeux latéraux (i) et (j) autorisent un libre débattement en torsion de la chaussure par rapport à la pédale, ce qui diminue la fatigue du cycliste et réduit les risques de tendinites. On remarquera qu'au cours de la mise en place de la chaussure sur la pédale, seul le ressort transversal 79 a été vraiment sollicité, si on excepte le léger enfoncement du piston 9 ; ce ressort pouvant être d'une puissance relativement faible, on comprend donc que le chaussage de la pédale se fait de manière commode.

Au cours des mouvements normaux de pédalage, les efforts vers le bas de la chaussure sur la pédale se font simplement par suite de l'appui de la surface 14 sur la plate-forme 61 ; les efforts vers le haut sont encaissés par les leviers 75, eux-mêmes en appui contre des parties fixes de la pédale (par exemple contre la face inférieure du couvercle 61 constituant la plate-forme).

Les efforts dirigés vers l'avant sont transmis par le bord avant 13 de la platine au rebord 74 de la pédale, et encaissés par ce rebord.

Les efforts dirigés vers l'arrière sont transmis par le fond de la rainure 211 (prévue dans le méplat 20 de la tête 2) aux parties coudées 750 des leviers 75, et sont encaissés par ces parties.

Les efforts de torsion apparaissant au cours du pédalage normal sont insuffisants pour vaincre la résistance (préréglée) à l'escamotage des pistons 8 et 9, et excepté le libre débattement latéral prévu, d'amplitude limitée, la chaussure demeure parfaitement centrée sur la pédale.

Au contraire, lorsqu'un effort de torsion violent est exercé par le pied, qui tend à faire tourner la chaussure autour d'un axe sensiblement vertical (orthogonal au plan P), que cet effort soit volontaire - en vue du déchaussage - ou involontaire (notamment à la suite d'une chute) lorsque les jeux (i) et (j) ont été compensés, les bords inclinés des rainures 4 et 5 vont coopérer contre les bords biseautés des pistons 8 et 9, à la manière de rampes, pour obliger ces pistons à se rétracter dans la pédale en comprimant les ressorts 80 et 90 respectivement. Ces mouvements de la platine et de l'un des pistons (piston 8) sont figurés par les flèches (G) et (H) respectivement à la figure 10A. Durant le mouvement de rotation de la platine (flèche F, figure 10) le bord avant 13 roule contre le rebord 74, et le déplacement de la tête 2 oblige les deux leviers 75 à s'écarter l'un de l'autre. Ces leviers ressortent donc des rainures 21 (flèches K, figure 12), et il suffit d'une légère traction du pied vers le haut pour que la tête 2 ressorte de l'ouverture 62, permettant la libération de la chaussure.

On notera que les bourrelets 210 prévus à l'arrière des rainures 21, facilitent l'ouverture des leviers, car on observe au début du mouvement une sorte de roulement (au lieu d'un glissement) des bourrelets contre les parties concaves correspondantes 751 des leviers.

Le bouchon de réglage 91 permet d'ajuster la précontrainte du ressort 90 afin de l'adapter aux caractéristiques du cycliste, notamment à sa force ; il va de soi qu'un système de réglage similaire pourrait être prévu pour l'autre ressort 80.

Pendant la marche, lorsque le talon de la chaussure se trouve en appui sur le sol, se sont les têtons 3 qui supportent la partie avant de la chaussure, ce qui évite l'usure de la partie proéminente 2.

Il peut être avantageusement associé à la platine 1 un jeu de cales en forme de coins, de différentes dimensions, qui permettent d'adapter avec précision la platine au cambre de la chaussure à laquelle on a affaire, la fixation de la platine à la semelle se faisant par l'intermédiaire d'une ou plusieurs de ces cales.

## Revendications

1. Dispositif de fixation d'une chaussure sur une pédale de bicyclette, du type comprenant une platine (1) fixée sous la chaussure, et une pédale (6) présentant une plate-forme (61) dont la surface supérieure, sensiblement plane est destinée à servir d'appui à la platine, la pédale (6) étant pourvue d'organes d'accrochage mobiles élastiquement adaptés pour coopérer avec des éléments complémentaires portés par la platine pour maintenir la chaussure normalement solidaire de la pédale, caractérisé par le fait que lesdits organes d'accrochage comprennent une paire de leviers parallèles (75), disposés en vis-à-vis l'un de l'autre, sensiblement dans un même plan qui est parallèle au plan (P) de la surface supérieure de la plate-forme (61), ces leviers (75) étant articulés autour d'axes (77) perpendiculaires à ce plan (P) et étant sollicités par un moyen élastique (79) qui tend à les rapprocher l'un de l'autre, tandis que lesdits éléments complémentaires portés par la platine (1) comprennent une proéminence - ou tête (2) - tournée vers le bas et pourvue d'une paire de rainures opposées (21), cette tête (2) étant adaptée pour s'engager entre les deux leviers (75) lorsque la chaussure est mise en place sur la pédale, de telle manière que les leviers (75) viennent se loger dans les rainures (21) en enserrant la tête (2) pour assurer la retenue de celle-ci.

2. Dispositif selon la revendication 1, caractérisé par le fait que les bords correspondants inférieurs (26) de la tête (2) et supérieurs (76) des leviers (75) sont chanfreinés, de manière à former des rampes qui permettent la mise en place automatique de haut en bas, par encliquetage élastique, de la tête (2) entre les leviers (75).

3. Dispositif selon l'une des revendications 1 ou 2, caractérisé par le fait que la tête (2) a une forme générale cylindrique, et que la plate-forme (61) présente une ouverture circulaire (62) autorisant le passage de cette tête (2).

4 Dispositif selon la revendication 3, caractérisé par le fait que les axes (77) d'articulation des leviers (75) sont situés en avant de la tête (2) et sont sollicités par un ressort de traction transversal (79) accroché à leurs extrémités libres, en arrière de la tête (2).

5. Dispositif selon l'une des revendications 1 à 4, caractérisé par le fait qu'il est pourvu de moyens élastiques additionnels assurant l'immobilisation en torsion de la chaussure sur la pédale, ces moyens comprenant au moins un piston (8, 9) sollicité par un ressort (80, 90) qui fait saillie au-dessus de la surface supérieure de la plate-forme (61), l'extrémité supérieure de ce piston étant adaptée pour s'engager dans une rainure complémentaire (4, 5) ménagée dans la face inférieure de la platine (1).

6- . Dispositif selon la revendication 5, caractérisé par le fait que l'extrémité du piston (8, 9) et la rainure (4, 5) ont des faces d'appui inclinées formant rampes, leurs sections ayant la forme générale de trapèzes.

7- . Dispositif selon l'une des revendications 5 ou 6 caractérisé par le fait que la tension du ressort (90) sollicitant le piston (9) peut être ajustée au moyen d'un bouchon de réglage (91) accessible par le dessous de la pédale.

8 . Dispositif selon l'une des revendications 5 à 7, caractérisé par le fait qu'il est prévu deux pistons de verrouillage (8, 9) disposés l'un en avant et l'autre en arrière de la tête (2), sur l'axe longitudinal (Y-Y') de la pédale, ces pistons coopérant avec des rainures longitudinales (4, 5) ménagées sous la platine ;

9- . Dispositif selon l'une des revendications 5 à 8 caractérisé par le fait que le piston (8, 9) est engagé dans la rainure (4, 5) avec un certain jeu (i, j), qui autorise un libre débattement en torsion, d'amplitude limitée, de la chaussure par rapport à la pédale.

10- Dispositif selon l'une des revendications 1 à 9, caractérisé par le fait que la partie avant de la platine (1) présente un bord convexe (13) apte à venir en appui contre un rebord concave (74) prévu à l'avant de la pédale.

Fig. 1

Fig. 2

Fig. 3

Fig.4

Fig.5

Fig.6

Fig.7

Fig 8

Fig.8A

Fig. 9

Fig 9A

Fig. 10

Fig. 10 A

Fig. 11

Fig. 12

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 5) |
|---|---|---|---|
| A | FR-A-2 590 222  (LYOTARD)<br>* Figures 1-10; page 2, ligne 20 - page 5, ligne 24 *<br>--- | 1 | B 62 M    3/08 |
| A | FR-A-2 561 502  (DRUGEON)<br>* Figures 1-10; page 5, ligne 37 - page 11, ligne 36 *<br>--- | 1 | |
| A | FR-A-2 598 996  (LYOTARD)<br>* En entier *<br>--- | 1 | |
| E | FR-A-2 623 464  (GENET)<br>* En entier *<br>----- | 1-10 | |

|  | DOMAINES TECHNIQUES RECHERCHES (Int. Cl.4) |
|---|---|
|  | B 62 M |

Le présent rapport a été établi pour toutes les revendications

| Lieu de la recherche | Date d'achèvement de la recherche | Examinateur |
|---|---|---|
| LA HAYE | 02-11-1989 | VANNESTE M.A.R. |